# EUROPÄISCHE PATENTSCHRIFT

(11) **EP 2 571 265 B1**
(45) Veröffentlichungstag und Bekanntmachung des Hinweises auf die Patenterteilung: **23.11.2016**
(21) Anmeldenummer: 12006234.4
(22) Anmeldetag: 04.09.2012
(51) Int. Cl.: H04N 7/18

(54) **Schienenfahrzeug mit einem Videoüberwachungssystem und Videoüberwachungssystem für ein Schienenfahrzeug**
Rail vehicle with a video surveillance system and video surveillance system for a rail vehicle
Véhicule sur rail avec un système de surveillance vidéo et système de surveillance vidéo pour un véhicule sur rail

(30) Priorität: 15.09.2011 DE 102011113340
(43) Veröffentlichungstag der Anmeldung: 20.03.2013
(73) Patentinhaber: Rail & Road Protec GmbH, 24941 Flensburg (DE)
(72) Erfinder: Wesseling Jessen, Søren, 24939 Flensburg (DE)
(74) Vertreter: Thomas, Götz

(56) Entgegenhaltungen:
- CN-U- 201 967 049
- GB-A- 2 450 520
- US-A1- 2010 020 175

## Beschreibung

Die Erfindung betrifft ein Schienenfahrzeug gemäß dem Oberbegriff des Anspruchs 1 und ein Videoüberwachungssystem für ein Schienenfahrzeug gemäß dem Oberbegriff des Anspruchs 15.

Schienenfahrzeuge, wie z.B. Nahverkehrszüge, U-Bahnen und S-Bahnen werden immer häufiger mit einer Fahrerselbstabfertigung betrieben, auch Driver-Only-Operation (DOO) genannt. Bei der Fahrerselbstabfertigung ist neben dem Zugführer oder Fahrer des Schienenfahrzeugs keine weitere Überwachungsperson vorgesehen, um die ordnungsgemäße Abfertigung des Schienenfahrzeugs zu überwachen und vor allem sicherzustellen, dass beim Schließen der Türen vor der Abfahrt niemand von einer sich schließenden Türe eingeklemmt wird. Die Fahrerselbstabfertigung erfordert es daher, dass der Zugführer oder Fahrer des Schienenfahrzeugs selbst das Schließen der Türen überwacht. Dazu werden häufig Türüberwachungskameras eingesetzt, die so an der Außenseite des Schienenfahrzeugs montiert sind, dass sich dessen Türen im Blickfeld der Kameras befinden. Bei den Türüberwachungskameras handelt es sich in der Regel um Videokameras, deren analoge Videosignale in einem mit den Kameras verbundenen Videoencoder digitalisiert und komprimiert und dann über ein Netzwerk, z.B. ein Ethernet-Netzwerk, in den Fahrerstand des Schienenfahrzeugs übertragen und dort in einem Videodecoder wieder dekodiert, d.h. in analoge Videosignale umgewandelt werden. Der Zugführer oder Fahrer kann dann auf einem Monitor die von den einzelnen Türüberwachungskameras aufgenommenen Bilddaten in Echtzeit abrufen und betrachten.

Neben den Türüberwachungskameras, den Videoencodern, dem Netzwerk, den Videodecodern und dem Monitor im Fahrerstand umfassen Videoüberwachungssysteme von Schienenfahrzeugen in der Regel auch noch Innenraumüberwachungskameras, die zur Überwachung des Innenraums jedes Wagens dienen. Wie die Videosignale von den Türüberwachungskameras können auch die Videosignale von den Innenraumüberwachungskameras zur Wiedergabe der Kamerabilder zum Fahrerstand übertragen werden. Außerdem umfassen die Videoüberwachungssysteme gewöhnlich mindestens einen mit den Innenraum- und Türüberwachungskameras verbundenen Videorecorder, der zur Aufzeichnung der Videosignale von den Innenraum- und Türüberwachungskameras dient, so dass diese bei Bedarf später ausgewertet werden können.

Die Sicherheitsvorschriften beim Betrieb von Schienenfahrzeugen und insbesondere beim Betrieb von U- und S-Bahnen sehen häufig vor, dass das Schienenfahrzeug Im Falle einer Unterbrechung oder Störung der Signalübertragung der Videosignale von den Türüberwachungskameras zum Fahrerstand automatisch gestoppt wird und nicht weiterfahren darf. Wenn sich die Unterbrechung oder Störung nicht beseitigen lässt, muss das Schienenfahrzeug abgeschleppt werden. Dies kann vor allem bei einer hohen Taktfrequenz zu erheblichen Verspätungen der Abfahrtszeiten nachfolgender Schienenfahrzeuge führen, die bei den Passagieren für Unmut sorgen und für den Betreiber der Schienenfahrzeuge mit hohen Kosten verbunden sind.

Um die Störungsanfälligkeit der Signalübertragung von den Türüberwachungskameras zum Fahrerstand zu verringern, ist es bereits bekannt, das zur Übertragung der Signale dienende Netzwerk als Ringnetzwerk auszubilden, so dass von jeder Stelle des Netzwerks zwei Netzwerkstränge zum Fahrerstand führen und im Falle einer Unterbrechung des Ringnetzwerks immer noch ein Netzwerkstrang für die Übertragung der Signale zum Fahrerstand verfügbar ist. Jedoch ist bei einer solchen Netzwerkarchitektur im Falle einer Unterbrechung der Spannungsversorgung des Netzwerks, zum Beispiel beim Ansprechen einer Sicherung oder Vorsicherung, keine Signalübertragung mehr möglich, da dann das gesamte Netzwerk spannungslos ist.

Aus der US 2010/0020175 A1 sind bereits ein Schienenfahrzeug und ein Videoüberwachungssystem der eingangs genannten Art bekannt. Das Schienenfahrzeug umfasst mehrere Wagen und ein Local Area Network (LAN), über das Videosignale von mehreren Kameras und einem Videorecorder in jedem Wagen zu einem PC mit Monitor im Fahrerstand übertragen werden. Das LAN ist die einzige Verbindung zwischen den Kameras und dem Videorecorder in jedem Wagen und dem PC im Fahrerstand.

Die GB 2 450 520 A offenbart ein Schienenfahrzeug mit einem Kommunikationssystem, das zur Datenübertragung einen Datenbus mit einer Ringstruktur und mindestens zwei parallelen Leitungen aufweist, die alternativ benutzt werden können.

Die CN 201967049 A offenbart ein fahrzeuggebundenes Videoüberwachungssystem, bei dem ein Medien-Gateway in jedem Wagen analoge Bildsignale von Kameras empfängt, diese in digitale Signale umwandelt und die Signale zur Speicherung auf einer Festplatte komprimiert. Gleichzeitig wird ein digitales Videosignal komprimiert und über ein Ethernet-Netzwerk zum Fahrerstand übertragen, wo es dekodiert und dargestellt wird. Wenn im Netzwerk ein Fehler auftritt, können die Bilddaten des Medien-Gateway aufgrund einer Ring-Redundanz des Netzwerks weiterhin zum Fahrerstand übertragen werden, nicht jedoch bei einer Störung der Spannungsversorgung des Netzwerks.

Ausgehend hiervon liegt der Erfindung die Aufgabe zugrunde, ein Schienenfahrzeug und ein Videoüberwachungssystem für ein Schienenfahrzeug der eingangs genannten Art dahingehend zu verbessern, dass sich eine Störung oder Unterbrechung der Signalübertragung zum Fahrerstand sicher verhindern lässt.

Diese Aufgabe wird erfindungsgemäß durch einen mit dem Videoencoder und dem Fahrerstand verbundenen primären Netzwerk- oder Leitungsstrang sowie einen autarken, vom primären Netzwerkstrang getrennten, mit dem Videorecorder und dem Fahrerstand verbundenen sekundären Netzwerk- oder Leitungsstrang gelöst, der im Fall einer Störung im primären Netzwerkstrang und/oder im Videoencoder eine Übertragung von Videosignalen der Türüberwachungskameras vom Videorecorder zum Fahrerstand gestattet. Die Erfindung ist besonders dann von Vorteil, wenn im Schienenfahrzeug bereits ein Videorecorder für die Innenraumüberwachung und/oder Türüberwachung vorgesehen ist, der dann auch zur Einspeisung der Videosignale in den sekundären Netzwerkstrang genutzt werden kann.

Der Erfindung liegt der Gedanke zugrunde, zur Aufzeichnung der analogen Videosignale von den Innenraumüberwachungskameras und den Türüberwachungskameras einen Videorecorder zu verwenden, der in entsprechender Weise wie der Videoencoder die von den Kameras empfangenen Videosignale vor ihrer Aufzeichnung digitalisiert und komprimiert und eine Netzwerkschnittstelle aufweist, die sich mit dem sekundären Netzwerkstrang verbinden lässt.

Während im normalen Betrieb die analogen Videosignale von den Türüberwachungskameras zum zugehörigen Videoencoder übertragen werden, wo sie digitalisiert und komprimiert und dann über den primären Netzwerkstrang zum Fahrerstand übertragen werden, ist es mit den erfindungsgemäßen Maßnahmen möglich, im Fall einer Störung im Videoencoder oder im primären Netzwerkstrang eine manuelle oder automatische Umschaltung auf den sekundären Netzwerkstrang vorzunehmen, um die zuvor vom Videoencoder empfangenen und über den primären Netzwerkstrang übertragenen Videosignale nunmehr über den Videorecorder und den sekundären Netzwerkstrang zum Fahrerstand zu übertragen. Damit ist es möglich, die Fahrt fortzusetzen und die Fehlersuche bzw. Fehlerbehebung auf einen späteren Zeitpunkt zu verschieben, wo sie ohne eine Beeinträchtigung des Fahrbetriebs möglich ist.

Mit anderen Worten können die analogen Videosignale von den Türüberwachungskameras wahlweise sowohl über den Videoencoder und den primären Netzwerkstrang als auch über den Videorecorder und den sekundären Netzwerkstrang zum Fahrerstand übertragen werden. Die Bildkodierung bzw. Digitalisierung der analogen Videosignale der Türüberwachungskameras erfolgt im zuerst genannten Fall im Videoencoder und im zuletzt genannten Fall im Videorecorder.

Da jede Türüberwachungskamera sowohl mit dem oder einem der Videoencoder als auch mit dem oder einem der Videorecorder verbunden ist und das von der Türüberwachungskamera erzeugte Videosignal sowohl zum Videoencoder als auch zum Videorecorder übertragen wird und da sowohl der oder jeder Videoencoder als auch der oder jeder Videorecorder über den primären bzw. den sekundären Netzwerkstrang mit dem Fahrerstand verbunden ist, wird durch die erfindungsgemäße Lösung sowohl im Hinblick auf die Übertragung der von den Türüberwachungskameras erzeugten analogen Videosignale, die Bildkodierung bzw. Digitalisierung der analogen Videosignale als auch die Übertragung der kodierten bzw. digitalisierten Videosignale für eine Redundanz gesorgt.

Gemäß einer bevorzugten Ausgestaltung der Erfindung können für den primären Netzwerkstrang und den sekundären Netzwerkstrang sowie die damit verbundenen Komponenten getrennte Strom- bzw. Spannungsversorgungen vorgesehen werden, so dass bei einer Unterbrechung der Versorgung des primären Netzwerkstrangs eine manuelle oder automatische Umschaltung auf den sekundären Netzwerkstrang und dessen separate Versorgung möglich ist. Dadurch wird auch im Hinblick auf die Spannungs- bzw. Stromversorgung der beiden Netzwerkstränge für eine Redundanz gesorgt.

Neben den separaten Spannungs- bzw. Stromversorgungen für die zwei getrennten Netzwerkstränge sieht eine weitere vorteilhafte Ausgestaltung der Erfindung vor, die Türüberwachungskameras über den zugehörigen Videoencoder und über den zugehörigen Videorecorder an die Strom- bzw. Spannungsversorgung anzuschließen, so dass im Fall einer Störung des Videoencoders die Strom- bzw. Spannungsversorgung der Türüberwachungskameras selbst weiter gewährleistet bleibt. Um zu verhindern, dass es im Normalbetrieb zu einem Stromfluss vom Videoencoder über die Türüberwachungskameras zum Videorecorder bzw. im Fall einer Störung zu einem Stromfluss vom Videorecorder über die Türüberwachungskameras zum Videoencoder kommt, sind vorteilhaft in den zur Strom- bzw. Spannungsversorgung dienenden Versorgungsleitungen zwischen den Türüberwachungskameras und dem Videoencoder sowie zwischen den Türüberwachungskameras und dem Videorecorder Richtdioden vorgesehen.

Eine weitere vorteilhafte Ausgestaltung der Erfindung schlägt vor, getrennte Sicherungen oder Schutzschalter für Komponenten des primären Netzwerkstrangs und Komponenten des sekundären Netzwerkstrangs vorzusehen bzw. durch entsprechende Maßnahmen bei der Auslegung der Strom- bzw. Spannungsversorgung sicher zu stellen, dass die mit dem primären Netzwerkstrang verbundenen Komponenten, wie der Videoencoder, sowie die mit dem sekundären Netzwerkstrang verbundenen Komponenten, wie der Videorecorder, nicht durch einfache Störungen gleichzeitig ausfallen können. Um die Videosignale von den Türüberwachungskameras sowohl zum Videoencoder und zum Videorecorder übertragen zu können, sind diese Kameras durch Signalleitungen mit dem Videoencoder und mit dem Videorecorder verbunden. Gemäß einer vorteilhaften Ausgestaltung der Erfindung ist der Videorecorder in einem größeren räumlichen Abstand von den Türüberwachungskameras als der Videoencoder angeordnet, so dass die Videosignale zuerst in den Videoencoder und den primären Netzwerkstrang und erst danach in den Videorecorder und den sekundären Netzwerkstrang eingespeist werden. Der Videoencoder weist vorteilhaft einen abschaltbaren Abschlusswiderstand auf, der abgeschaltet wird, so dass das Videosignal dem Videoencoder und das Restsignal dem Videorecorder zugeführt werden kann. Auf diese Weise kann die Integrität der Videosignale bewahrt und Signalreflexionen vermieden werden.

Um es zu ermöglichen, beliebige Wagen zu einem Schienenfahrzeug zusammenzustellen, ist vorzugsweise in jedem der Wagen des Schienenfahrzeugs ein Videoencoder und ein Videorecorder untergebracht, die jeweils mit den an der Außenseite des Wagens montierten Türüberwachungskameras verbunden sind. Dadurch weisen Schienenfahrzeuge mit mehreren Wagen eine Mehrzahl von Videoencodern und eine Mehrzahl von Videorecordern auf, wobei die ersteren vorzugsweise in Parallelschaltung durch den primären Netzwerkstrang mit dem Fahrerstand verbunden sind und die letzteren durch den sekundären Netzwerkstrang vorzugsweise ebenfalls in Parallelschaltung mit dem Fahrerstand verbunden sind. Der Videorecorder jedes Wagens ist darüber hinaus auch mit den Innenraumüberwachungskameras des Wagens verbunden.

Bei dem getrennten primären und sekundären Netzwerkstrang handelt es sich vorzugsweise jeweils um ein Ethernet-Netzwerk für ein lokales Datennetz oder Local Area Network (LAN) des Schienenfahrzeugs, die jeweils eine unbestimmte Menge an Netzwerkumschaltern (Netzwerk-Switches) aufweisen. Die beiden Ethernet-Netzwerkstränge bzw. Netzwerke sind jeweils autark und nicht miteinander verbunden, so dass sie völlig unabhängig voneinander arbeiten können. Bei den über die Netzwerkstränge übertragenen digitalisierten Videosignalen handelt es sich um einen kontinuierlichen Videodatenstrom, der in einem Streaming-Verfahren übertragen wird, vorzugsweise nach dem RTP- oder RTPS-Protokoll.

Um zusätzlich zu der erfindungsgemäß vorhandenen Redundanz bei der Signalübertragung und bei der Signalkodierung auch bei der Signaldekodierung für eine Redundanz zu sorgen, sieht eine weitere bevorzugte Ausgestaltung der Erfindung vor, dass der primäre Netzwerk- oder Leitungsstrang mit einem ersten Videodecoder verbunden ist und der sekundäre Netzwerk- oder Leitungsstrang mit einem vom ersten Videodecoder getrennten zweiten Videodecoder verbunden ist, wobei sich die Videodecoder vorzugsweise im Fahrerstand befinden. Im normalen Betrieb übernimmt der erste Videodecoder die Dekodierung der durch den primären Netzwerkstrang übertragenen Videosignale. Im Fall einer Störung im primären Netzwerkstrang, einer Störung in einem mit dem primären Netzwerkstrang verbundenen Videoencoder oder einer Störung im ersten Videodecoder kann auf den sekundären Netzwerkstrang umgeschaltet werden, woraufhin der zweite Videodecoder die Dekodierung der durch diesen Netzwerkstrang übertragenen Videosignale übernimmt. Beide Videodecoder empfangen den über den jeweiligen Netzwerkstrang übertragenen digitalisierten Datenstrom und geben ihn nach einer Dekomprimierung und Analogisierung über einen analogen Videoausgang wieder aus.

Darüber hinaus kann auch im Hinblick auf die Wiedergabe der Videosignale noch für eine Redundanz gesorgt werden, indem im Fahrerstand zwei Monitore vorgesehen werden, von denen der erste Monitor über den ersten Videodecoder mit dem primären Netzwerkstrang und der zweite Monitor über den zweiten Videodecoder mit dem sekundären Netzwerkstrang verbunden ist. Im Fall einer störungsbedingten Umschaltung der Signalübertragung vom primären Netzwerkstrang auf den sekundären Netzwerkstrang erfolgt automatisch auch eine Umschaltung vom ersten auf den zweiten Monitor, der dann an Stelle des ersten Monitors das empfangene analoge Videosignal auf seinem Bildschirm wiedergibt.

Wenn im Fahrerstand die Unterbringung von zwei Monitoren aus Platzgründen nicht möglich ist, kann stattdessen ein einziger Monitor im Fahrerstand vorgesehen werden, der sowohl mit dem primären und dem sekundären Netzwerkstrang verbunden ist. In diesem Fall kann für eine Redundanz der Wiedergabe gesorgt werden, wenn der Monitor seine Spannung entweder aus der Spannungsversorgung des primären Netzwerkstrangs oder im Fall einer Störung aus der Spannungsversorgung des sekundären Netzwerkstrangs beziehen kann.

Dort, wo im Fahrerstand nur ein einziger Monitor vorgesehen ist, kann es sich bei diesem Monitor entweder um einen üblichen Monitor handeln, der durch einen vor dem Monitor angeordneten Videoumschalter (Video-Switch) im Normalbetrieb mit dem ersten Videodecoder und über diesen mit dem primären Netzwerkstrang verbunden ist. Bei einer Störung kann der Videoumschalter entweder manuell durch den Fahrer oder automatisch durch ein Signal vom Schienenfahrzeug betätigt werden, um den Monitor mit dem zweiten Videodecoder und über diesen mit dem sekundären Netzwerkstrang zu verbinden. Durch die Betätigung des Videoumschalters wird auch auf die Spannungsversorgung des sekundären Netzwerkstrangs umgeschaltet.

Alternativ kann jedoch auch ein so genannter Human-Machine-Interface(HMI)-Monitor eingesetzt werden, der über getrennte Schnittstellen direkt mit dem primären und mit dem sekundären Netzwerkstrang verbunden ist und eine Rechnereinheit umfasst, die bei einer Störung im primären Netzwerkstrang automatisch eine Umschaltung auf den sekundären Netzwerkstrang bzw. dessen Spannungsversorgung vornimmt.

Im Folgenden wird die Erfindung anhand einiger in der Zeichnung dargestellter Ausführungsbeispiele näher erläutert. Es zeigen
Fig. 1 eine schematische Darstellung eines erfindungsgemäßen Schienenfahrzeugs für einen Selbstabfertigungsbetrieb;
Fig. 2 eine schematische Darstellung von Teilen eines Videoüberwachungssystems des Schienenfahrzeugs;
Fig. 3 eine schematische Darstellung entsprechend Fig. 2, jedoch mit einer Modifikation des Videoüberwachungssystems;
Fig. 4 eine schematische Darstellung entsprechend Fig. 2 und 3, jedoch mit einer weiteren Modifikation des Videoüberwachungssystems;
Fig. 5 eine schematische Darstellung eines Teil der Spannungsversorgung von Türüberwachungskameras
Fig. 6 eine schematische Darstellung entsprechend Fig. 5, jedoch mit einer Modifikation der Spannungsversorgung.

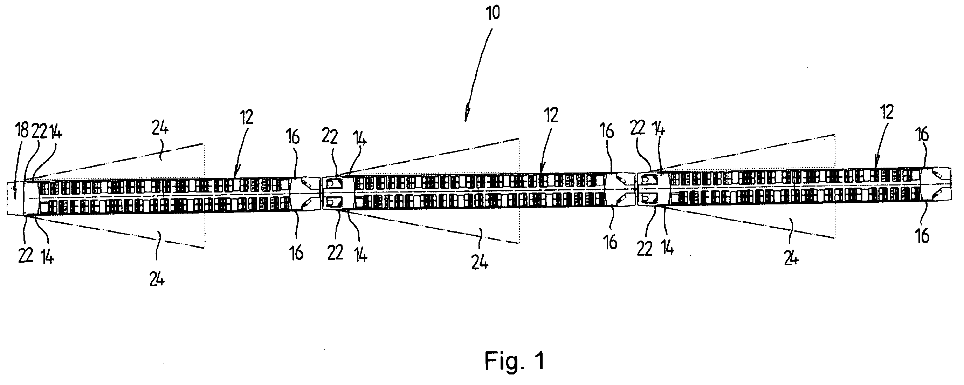

Das in Fig. 1 beispielhaft dargestellte Schienenfahrzeug 10 umfasst drei Wagen 12 mit jeweils zwei Türen 14, 16 am vorderen und hinteren Ende jedes Wagens 12. Bei dem Schienenfahrzeug 10 kann es sich zum Beispiel um einen Nahverkehrszug, eine U-Bahn oder eine S-Bahn handeln, die für eine Selbstabfertigung durch den Zugführer oder Fahrer (Driver-Only-Operation) bestimmt sind. Bei einem solchen Schienenfahrzeug 10 muss der in einem Fahrerstand 18 an einem Ende des Schienenfahrzeugs 10 sitzende Zugführer oder Fahrer vor jeder Abfahrt des Schienenfahrzeugs 10 allein, d.h. ohne Unterstützung durch einen Zugbegleiter oder eine örtliche Aufsicht am Bahnsteig, unter anderem überwachen, ob sich die Türen 14, 16 sämtlicher Wagen 12 ordnungsgemäß geschlossen haben und ob keine Person beim Ein- oder Ausstieg von einer sich schließenden Türe 14, 16 eingeklemmt worden ist.

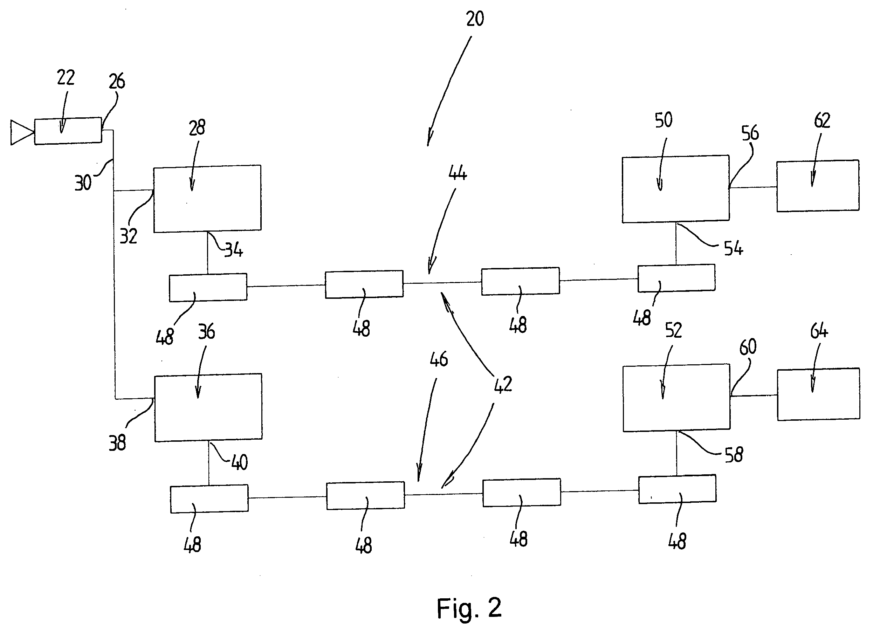

Um dies zu gewährleisten, ist das Schienenfahrzeug 10 mit einem Videoüberwachungssystem 20 ausgestattet. Bei dem in Fig. 2 dargestellten Videoüberwachungssystem 20 weist jeder Wagen 12 eine Mehrzahl von Türüberwachungskameras 22 auf, von denen in den Figuren 2 bis 6 jeweils nur eine beispielhaft dargestellt ist. Die Türüberwachungskameras 22 sind so an den Außenseiten des Wagens 12 montiert, dass sich jede Türe 14, 16 des Wagens 12 im Blickfeld 24 von einer der Türüberwachungskameras 22 befindet, wie in Fig. 1 durch unterbrochene Linien angezeigt. Bei den in einem wetterfesten Kunststoffgehäuse untergebrachten Türüberwachungskameras 22 handelt es sich um Videokameras, die einen Videoausgang 26 besitzen, an dem sie ein Videosignal in Form eines Standard 1Vs (1Volt-Spitze-Spitze) Farb-Bild-Austast-Synchron (FBAS)-Signals abgeben.

Das Videoüberwachungssystem 20 umfasst weiter in jedem Wagen 12 einen Videoencoder 28. Von diesen Videoencodern 28 ist in den Figuren 2 bis 6 jeweils nur einer beispielhaft dargestellt. Der Videoencoder 28 dient dazu, die von den Türüberwachungskameras 22 erzeugten und zum Videoencoder 28 übertragenen analogen Videosignale zu empfangen und zu kodieren, das heißt zu digitalisieren und zu komprimieren, um sie dann in Echtzeit in Form eines kontinuierlichen Videodatenstroms zum Fahrerstand 18 zu übertragen. Verlorene, nicht-übertragene oder fehlerhaft übertragene Daten werden nicht noch einmal übertragen, da dies bei der Bildwiedergabe zu Verzögerungen führen würde. Zur Übertragung der analogen Videosignale von den Kameras 22 zum Videoencoder 28 dienen Signalleitungen 30, die den Videoausgang 26 von jeder Türüberwachungskamera 22 mit einem Videoeingang 32 des Videoencoders 28 verbinden. Der Videoencoder 28 umfasst weiter einen A/D-Wandler (nicht dargestellt), einen Prozessor (nicht dargestellt) zum Komprimieren der digitalisierten Videodaten und eine Netzwerkschnittstelle 34, der die digitalisierten und komprimierten Videodaten zugeführt werden.

Das Videoüberwachungssystem 20 umfasst außerdem in jedem Wagen 12 einen Videorecorder 36. Von den Videorecordern 36 ist in den Figuren 1 bis 6 jeweils nur einer beispielhaft dargestellt. Bei den Videorecordern 36 kann es sich um integrierte Videorecorder einer zur Innenraumüberwachung eingesetzte Videokamera (nicht dargestellt) handeln, welche die analogen Videosignale von der Innenraumüberwachungskamera und von den Türüberwachungskameras 22 digitalisieren und komprimieren und in digitalisierte und komprimierter Form speichert. Der Videorecorder 36 umfasst einen A/D-Wandler (nicht dargestellt), einen Prozessor (nicht dargestellt) zum Komprimieren der digitalisierten Videodaten, einen Videodatenspeicher (nicht dargestellt), einen durch die Signalleitungen 30 mit dem Videoausgang 26 von jeder der Kameras 22 des Wagens 12 verbundenen Videoeingang 38, sowie eine Netzwerkschnittstelle 40, der die digitalisierten Videodaten zugeführt werden können.

Der Videoencoder 28 und der Videorecorder 36 sind jeweils imstande, eigenständig und unabhängig voneinander einen kontinuierlichen Videodatenstrom zu erzeugen, der zum Beispiel für eine Übertragung nach dem RTP- oder RTPS-Protokoll geeignet ist.

Zur Übertragung des kontinuierlichen Videodatenstroms zum Fahrerstand 18 umfasst das Videoüberwachungssystem 20 zwei Local Area Networks (LANs) in Form von autarken Ethernet-Netzwerken oder Netzwerksträngen 44 und 46 auf, die sich durch das gesamte Schienenfahrzeug 10, d.h. durch alle Wagen 12, bis zum Fahrerstand 18 erstrecken. Ein Ethernet-Netzwerkstrang 44 ist ein primärer Netzwerk- oder Leitungsstrang 44, der zur Datenübertragung im Normalbetrieb dient, während der andere Ethernet-Netzwerkstrang 46 ein vom primären Ethernet-Netzwerkstrang 44 getrennter sekundärer Netzwerk- oder Leitungsstrang 46 ist, der zur Datenübertragung im Fall einer Störung dient. Der primäre Netzwerkstrang 44 ist mit den Netzwerkschnittstellen 34 der Videoencoder 28 der einzelnen Wagen 12 verbunden und verbindet diese in Parallelschaltung mit dem Fahrerstand 18. Der sekundäre Netzwerkstrang 46 ist mit den Netzwerkschnittstellen 40 der Videorecorder 36 der einzelnen Wagen 12 verbunden und verbindet diese in Parallelschaltung mit dem Fahrerstand 18. Beide Netzwerkstränge 44, 46, die auch als Leitungsstränge oder Kanäle bezeichnet werden können, weisen eine unbestimmte Menge Netzwerkumschalter (Netzwerk-Switches) 48 auf. Die Übertragung des Datenstroms erfolgt in jedem der Netzwerkstränge 44, 46 mit einem Streaming-Verfahren.

Das in Fig. 2 dargestellte Videoüberwachungssystem 20 umfasst weiter im Fahrerstand 18 einen ersten Videodecoder 50 und einen zweiten Videodecoder 52. Der erste Videodecoder 50 weist eine mit dem primären Netzwerkstrang 44 verbundene Netzwerkschnittstelle 54 und einen Videoausgang 56 auf. Der Videodecoder 50 dient dazu, die im Normalbetrieb durch den primären Netzwerkstrang 44 übertragenen digitalen Videosignale zu decodieren, d.h. zu dekomprimieren und in analoge Videosignale umzuwandeln. Der zweite Videodecoder 52 weist eine mit dem sekundären Netzwerkstrang 46 verbundene Netzwerkschnittstelle 58 und einen Videoausgang 60 auf und dient dazu, die im Fall einer Störung durch den sekundären Netzwerkstrang 46 übertragenen digitalen Videosignale zu decodieren, d.h. zu dekomprimieren und in analoge Videosignale umzuwandeln.

Das Videoüberwachungssystem 20 in Fig. 2 umfasst außerdem einen ersten Monitor 62 und einen zweiten Monitor 64, die beide im Fahrerstand 18 angeordnet sind. Der erste Monitor 62 ist mit dem Videoausgang 56 des ersten Videodecoders 50 verbunden, so dass im Normalbetrieb die durch den ersten Netzwerkstrang 44 übertragenen Videobilder der Türüberwachungskameras 22 auf einem Bildschirm des ersten Monitors 62 dargestellt werden können. Der zweite Monitor 64 ist mit dem Videoausgang 60 des zweiten Videodecoders 52 verbunden. Im Fall einer Störung in einem der Videoencoder 28, im ersten Netzwerkstrang 44 oder im ersten Videodecoder 50 kann die Signalübertragung manuell oder automatisch auf den zweiten Netzwerkstrang 46 umgeschaltet werden, woraufhin die Videobilder der Türüberwachungskameras 22 vom Videorecorder 36 aus durch den zweiten Netzwerkstrang 46 zum zweiten Videodecoder 52 übertragen und auf einem Bildschirm des zweiten Monitors 64 dargestellt werden können.

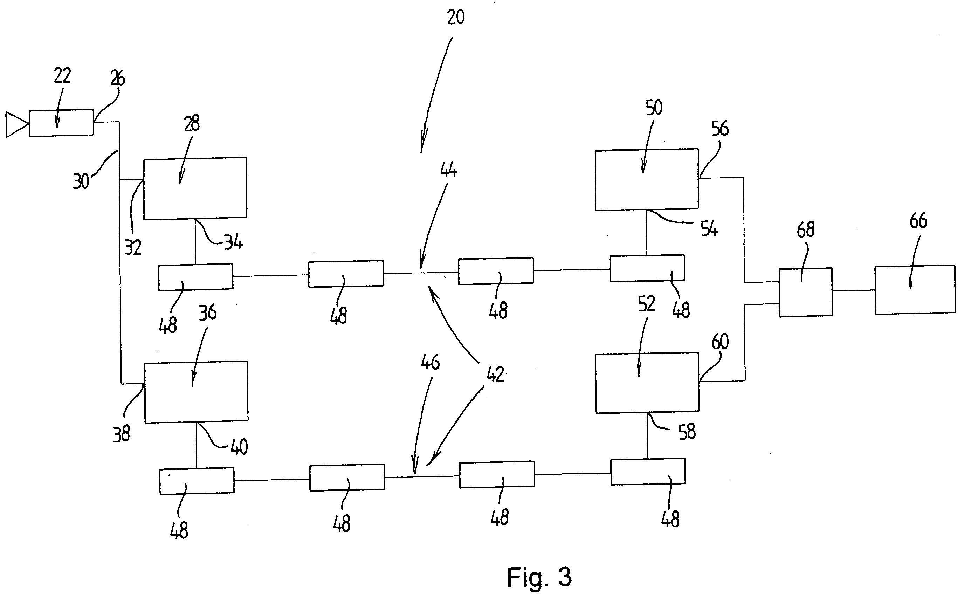

Das Videoüberwachungssystem 20 in Fig. 3 unterscheidet sich von dem zuvor beschriebenen Videoüberwachungssystem 20 in Fig. 2 dadurch, dass im Fahrerstand 18 nur ein einziger Monitor 66 vorhanden ist, der über einen vom Zugführer oder Fahrer manuell betätigbaren Videoumschalter (Video-Switch) 68 mit dem Videoausgang 56 des ersten Videodecoders 50 und mit dem Videoausgang 60 des zweiten Videodecoders 52 verbunden ist. Mit Hilfe des Videoumschalters (Video-Switch) 68 kann der Zugführer oder Fahrer im Normalbetrieb die analogen Videosignale aus dem ersten Videodecoder 50 und im Falle einer Störung die analogen Videosignale aus dem zweiten Videodecoder 52 zum Monitor 66 zuführen, um die Videobilder der Türüberwachungskameras 22 auf einem Bildschirm des Monitors 66 wiederzugeben.

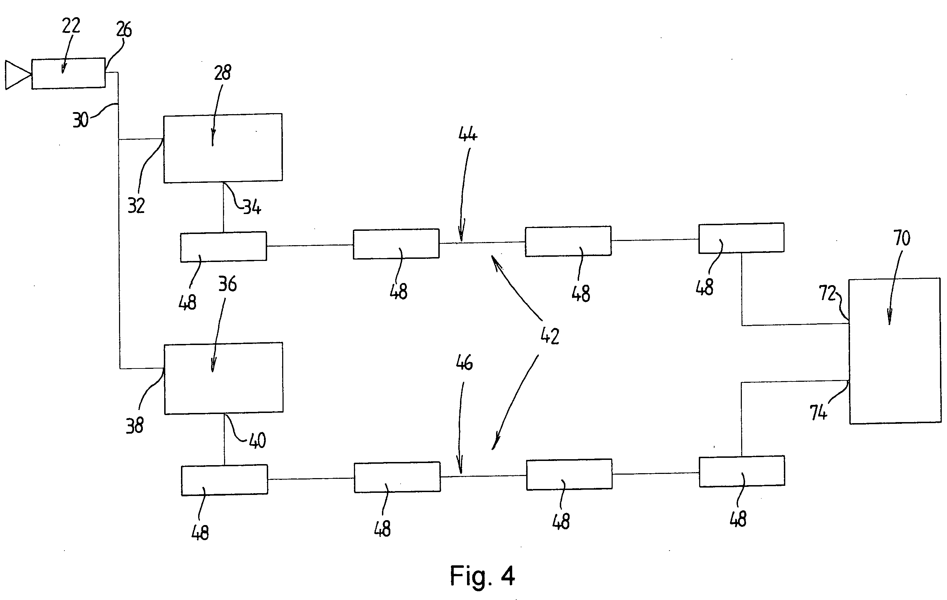

Das Videoüberwachungssystem 20 in Fig. 4 unterscheidet sich von dem Videoüberwachungssystem 20 in Fig. 2 ebenfalls dadurch, dass im Fahrerstand 18 nur ein einziger Monitor 70 vorhanden ist. Bei dem Monitor 70 handelt es sich jedoch um einen Human-Machine-Interface(HMI)-Monitor, der eine mit dem primären Netzwerkstrang 44 verbundene erste Netzwerkschnittstelle 72 und eine mit dem sekundären Netzwerkstrang 46 verbundene zweite Netzwerkschnittstelle 74 sowie eine integrierte Rechnereinheit (nicht dargestellt) besitzt und in der Lage ist, mittels der Rechnereinheit die im Normalbetrieb über die erste bzw. im Fall einer Störung über die zweite Netzwerkschnittstelle 72 bzw. 74 empfangenen digitalisierten Videodatenströme in Form von Videobildern der Türüberwachungskameras 22 auf einem Bildschirm des Monitors 70 wiederzugeben. Dadurch ist zwischen dem HMI-Monitor 70 und dem primären bzw. sekundären Netzwerkstrang 44 bzw. 46 kein Videodecoder erforderlich.

Um es zu ermöglichen, die analogen Videosignale von den Türüberwachungskameras 22 sowohl in den Videoencoder 28 und dann in den primären Netzwerkstrang 44 als auch in den Videorecorder 36 und dann in den sekundären Netzwerkstrang 46 einzuspeisen, werden die analogen Videosignale von den Türüberwachungskameras 22 geteilt. Zu diesem Zweck sind die Signalleitungen 30 von den Videoausgängen 26 der Kameras 22 sowohl mit dem Videoencoder 28 und mit dem Videorecorder 36 verbunden. Damit die Videosignale aus den Videoausgängen 26 der Türüberwachungskameras 22 durch die Signalleitungen 30 zuerst in den Videoencoder 28 und in den primären Netzwerkstrang 44 und erst danach in den Videorecorder 36 und in den sekundären Netzwerkstrang 46 eingespeist werden, ist der räumliche Abstand zwischen den Türüberwachungskameras 22 und dem Videoencoder 28 jedes Wagens 12 kleiner als der räumliche Abstand zwischen den Türüberwachungskameras 22 und dem Videorecorder 36, wie in den Figuren 2 bis 4 schematisch dargestellt. Um die Integrität der Videosignale zu bewahren und Signalreflexionen zu vermeiden, wird in den Videoencodern 28 zudem der übliche 75 Ω Abschlusswiderstand abgeschaltet, und die Signalleitung 30 somit vom Videorecorder 36 abgeschlossen.

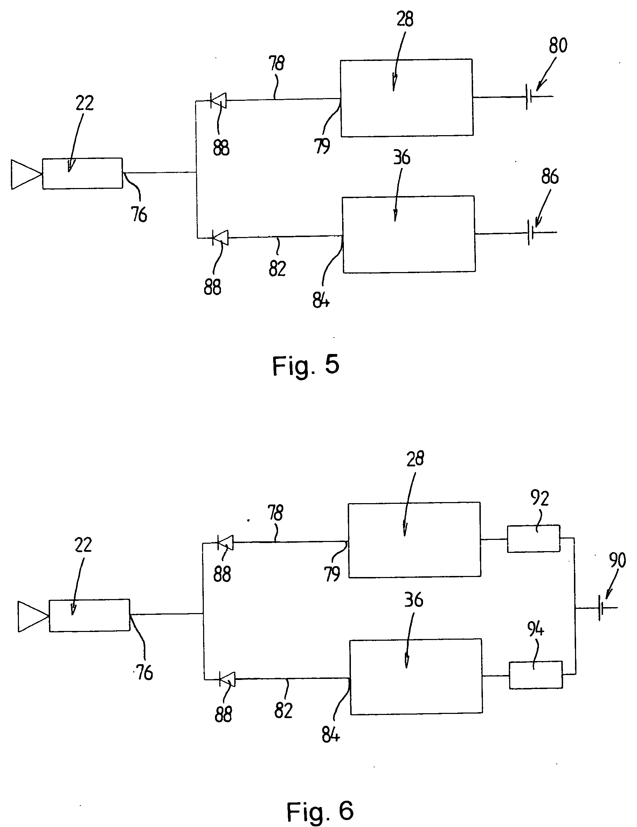

Fig. 5 und 6 zeigen jeweils einen Teil der Spannungsversorgung der Türüberwachungskameras 22 des Videoüberwachungssystems 20 in schematischer Darstellung. Wie in Fig. 5 und 6 beispielhaft für eine der Türüberwachungskameras 22 dargestellt, weisen die Kameras 22 einen zur Strom- bzw. Spannungsversorgung dienenden Netzanschluss 76 auf.

Bei der Spannungsversorgung in Fig. 5 ist der Netzanschluss 76 durch eine Versorgungsleitung 78 mit einem Netzausgang 79 des Videoencoders 28 verbunden, der von einem ersten Strom- bzw. Spannungsversorgungsnetz 80 des Schienenfahrzeugs 10 gespeist wird. Der Netzanschluss 76 ist weiter durch eine zweite Versorgungsleitung 82 mit einem Netzausgang 84 des Videorecorders 36 verbunden, der von einem vom ersten Strom- bzw. Spannungsversorgungsnetz 80 getrennten oder unabhängigen zweiten Strom- bzw. Spannungsversorgungsnetz 86 des Schienenfahrzeugs 10 gespeist wird. Auf diese Weise kann die Strom- bzw. Spannungsversorgung der Türüberwachungskameras 22 auch im Fall einer Störung aufrechterhalten werden. Um einen Stromfluss vom Videoencoder 28 zum Videorecorder 36, und umgekehrt, zu verhindern, enthalten die Versorgungsleitungen 78 und 82 jeweils eine Richtdiode 88.

Im Unterschied dazu werden bei der Spannungsversorgung in Fig. 6 der Videoencoder 28 und der Videorecorder 36 aus einem gemeinsamen Strom- bzw. Spannungsversorgungsnetz 90 gespeist, sind jedoch durch getrennte Vorsicherungen 92, 94 mit dem Strom- bzw. Spannungsversorgungsnetz 90 verbunden, damit der Videoencoder 28 und der Videorecorder 36 nicht gleichzeitig durch einfache Fehler in der Spannungsversorgung ausfallen können.

Eine entsprechende getrennte Spannungs- und Stromversorgung ist auch für den primären und sekundären Netzwerkstrang 44 bzw. 46 vorgesehen, ebenso wie für die anderen mit dem primären bzw. sekundären Netzwerkstrang 44 bzw. 46 verbundenen Komponenten, wie den ersten und zweiten Videodecoder 50 bzw. 52, sowie den ersten und zweiten Monitor 62, 64 in Fig. 2.

Dort, wo der primäre und der sekundäre Netzwerkstrang 44 bzw. 46 im Fahrerstand 18 mit einem einzigen Netzwerkumschalter 68 (Fig. 3) oder HMI-Monitor 70 (Fig. 4) verbunden sind, weisen diese Komponenten ebenfalls eine redundante Spannungsversorgung auf, so dass sie im Normalbetrieb ihre Spannung aus einer Spannungsversorgung des primären Netzwerkstrangs 44 und im Falle einer Störung aus einer Spannungsversorgung des sekundären Netzwerkstrangs 46 beziehen.

## Patentansprüche

1. Schienenfahrzeug (10) mit einem Fahrerstand (18), einer Mehrzahl von Türüberwachungskameras (22) an der Außenseite des Schienenfahrzeugs (10), mindestens einem Videoencoder (28) zur Digitalisierung von analogen Videosignalen von sämtlichen oder von einem Teil der Türüberwachungskameras (22), mindestens einem Videorecorder (36) zur Aufzeichnung von Videosignalen von sämtlichen oder von einem Teil der Türüberwachungskameras (22), sowie einem Netzwerk (42) zur Übertragung von digitalisierten Videosignalen zum Fahrerstand (18), **gekennzeichnet durch** einen mit dem Videoencoder (28) und dem Fahrerstand (18) verbundenen primären Netzwerkstrang (44) sowie einen vom primären Netzwerkstrang (44) getrennten, mit dem Videorecorder (36) und dem Fahrerstand (18) verbundenen sekundären Netzwerkstrang (46), der im Falle einer Störung im primären Netzwerkstrang (44) und/oder im Videoencoder (28) eine Übertragung von Videosignalen der Türüberwachungskameras (22) vom Videorecorder (36) zum Fahrerstand (18) gestattet.

2. Schienenfahrzeug nach Anspruch 1, **gekennzeichnet durch** zwei getrennte Videodecoder (50, 52), von denen der erste (50) mit dem primären Netzwerkstrang (44) und der zweite (52) mit dem sekundären Netzwerkstrang (46) verbunden ist.

3. Schienenfahrzeug nach Anspruch 2, **gekennzeichnet durch** zwei Monitore (62, 64) im Fahrerstand (18), von denen einer über den ersten Videodecoder (50) mit dem primären Netzwerkstrang (44) und der andere über den zweiten Videodecoder (52) mit dem sekundären Netzwerkstrang (46) verbunden ist.

4. Schienenfahrzeug nach Anspruch 2, **gekennzeichnet durch** einen einzigen Monitor (66; 70) im Fahrerstand (18), der sowohl mit dem primären und dem sekundären Netzwerkstrang (44, 46) verbunden ist.

5. Schienenfahrzeug nach Anspruch 4, **dadurch gekennzeichnet, dass** vor dem Monitor (66) ein Videoumschalter (68) angeordnet ist, der über den ersten Videodecoder (50) mit dem primären Netzwerkstrang (44) und über den zweiten Videodecoder (52) mit dem sekundären Netzwerkstrang (56) verbunden ist.

6. Schienenfahrzeug nach Anspruch 4, **dadurch gekennzeichnet, dass** der Monitor (70) ein HMI-Monitor ist, der über getrennte Netzwerkschnittstellen (72, 74) direkt mit dem primären und mit dem sekundären Netzwerkstrang (44, 46) verbunden ist und eine integrierte Rechnereinheit umfasst, die bei einer Störung im primären Netzwerkstrang (44) oder im Videoencoder (28) automatisch auf den sekundären Netzwerkstrang (46) umschaltet.

7. Schienenfahrzeug nach einem der vorangehenden Ansprüche, **gekennzeichnet durch** getrennte Strom- bzw. Spannungsversorgungen (80, 86) für den primären Netzwerkstrang (44) und für den sekundären Netzwerkstrang (46).

8. Schienenfahrzeug nach einem der vorangehenden Ansprüche, **dadurch gekennzeichnet, dass** die Türüberwachungskameras (22) über den Videoencoder (28) und über den Videorecorder (30) an eine Strom- bzw. Spannungsversorgung angeschlossen sind.

9. Schienenfahrzeug nach Anspruch 8, **gekennzeichnet durch** Richtdioden (88) in Versorgungsleitungen (78, 82) zwischen den Türüberwachungskameras (22) und dem Videoencoder (28) sowie zwischen den Türüberwachungskameras (22) und dem Videorecorder (36).

10. Schienenfahrzeug nach einem der vorangehenden Ansprüche, **gekennzeichnet durch** getrennte Sicherungen (92, 94) für den primären Netzwerkstrang (44) und den sekundären Netzwerkstrang (46) bzw. damit verbundene Komponenten (28, 50, 62; 36, 52, 64).

11. Schienenfahrzeug nach einem der vorangehenden Ansprüche, **dadurch gekennzeichnet, dass** der Videoencoder (28) einen abschaltbaren Abschlusswiderstand aufweist.

12. Schienenfahrzeug nach einem der vorangehenden Ansprüche, **dadurch gekennzeichnet, dass** der Videorecorder (36) einen größeren räumlichen Abstand von den Türüberwachungskameras (22) als der Videoencoder (28) aufweist.

13. Schienenfahrzeug nach einem der vorangehenden Ansprüche, **dadurch gekennzeichnet, dass** mehrere Videoencoder (28) und/oder mehrere Videorecorder (36) im Schienenfahrzeug (10) vorgesehen sind, wobei die Videoencoder (28) durch den primären Netzwerkstrang (44) in Parallelschaltung mit dem Fahrerstand (18) verbunden sind und wobei die Videorecorder (36) durch den sekundären Netzwerkstrang (46) in Parallelschaltung mit dem Fahrerstand (18) verbunden sind.

14. Schienenfahrzeug nach einem der vorangehenden Ansprüche, **gekennzeichnet durch** mehrere Wagen (12), wobei in jedem der Wagen (12) ein Videoencoder (28) und ein Videorecorder (36) vorgesehen sind, die jeweils mit den an der Außenseite des Wagens (12) montierten Türüberwachungskameras (22) verbunden sind.

15. Videoüberwachungssystem für ein Schienenfahrzeug (10) mit Fahrerselbstabfertigung, das eine Mehrzahl von Türüberwachungskameras (22) zur Montage an einer Außenseite des Schienenfahrzeugs (10), mindestens einen Videoencoder (28) zur Digitalisierung von analogen Videosignalen von sämtlichen oder einem Teil der Türüberwachungskameras (22), mindestens einen Videorecorder (36) zur Aufzeichnung von Videosignalen von sämtlichen oder von einem Teil der Türüberwachungskameras (22), sowie ein Netzwerk (42) zur Übertragung von digitalisierten Videosignalen zu einem Fahrerstand (18) des Schienenfahrzeugs (10) aufweist, **gekennzeichnet durch** einen mit dem Videoencoder (28) und dem Fahrerstand (18) verbundenen primären Netzwerkstrang (44) sowie einen vom primären Netzwerkstrang (44) getrennten, mit dem Videorecorder (36) und dem Fahrerstand (18) verbundenen sekundären Netzwerkstrang (46), der im Falle einer Störung im primären Netzwerkstrang (44) und/oder im Videoencoder (28) eine Übertragung von Videosignalen der Türüberwachungskameras (22) vom Videorecorder (36) zum Fahrerstand (18) gestattet.

## Claims

1. Rail vehicle (10) having a driver's cab (18), a plurality of door monitoring cameras (22) on the exterior of the rail vehicle (10), at least one video encoder (28) for digitizing analogue video signals from all or from a portion of the door monitoring cameras (22), at least one video recorder (36) for recording video signals from all or from a portion of the door monitoring cameras (22) and also a network (42) for transmitting digitized video signals to the driver's cab (18), **characterized by** a primary network path (44), which is connected to the video encoder (28) and the driver's cab (18), and also a secondary network path (46), which is separate from the primary network path (44) and is connected to the video recorder (36) and the driver's cab (18) and, in the case of a disturbance in the primary network path (44) and/or in the video encoder (28), permits a transmission of video signals of the door monitoring cameras (22) from the video recorder (36) to the driver's cab (18).

2. Rail vehicle according to Claim 1, **characterized by** two separate video decoders (50, 52), of which the first (50) is connected to the primary network path (44) and the second (52) is connected to the secondary network path (46).

3. Rail vehicle according to Claim 2, **characterized by** two monitors (62, 64) in the driver's cab (18), of which one is connected to the primary network path (44) via the first video decoder (50) and the other is connected to the secondary network path (46) via the second video decoder (52).

4. Rail vehicle according to Claim 2, **characterized by** a single monitor (66; 70) in the driver's cab (18) which is connected both to the primary and to the secondary network path (44, 46).

5. Rail vehicle according to Claim 4, **characterized in that** a video switch (68) is arranged upstream of the monitor (66), said video switch being connected to the primary network path (44) via the first video decoder (50) and to the secondary network path (56) via the second video decoder (52).

6. Rail vehicle according to Claim 4, **characterized in that** the monitor (70) is an HMI monitor which is connected directly to the primary and to the secondary network path (44, 46) via separate network interfaces (72, 74) and comprises an integrated computer unit, which switches automatically to the secondary network path (46) in the case of a disturbance in the primary network path (44) or in the video encoder (28).

7. Rail vehicle according to any of the preceding claims, **characterized by** separate current and/or voltage supplies (80, 86) for the primary network path (44) and for the secondary network path (46).

8. Rail vehicle according to any of the preceding claims, **characterized in that** the door monitoring cameras (22) are connected to a current and/or voltage supply via the video encoder (28) and via the video recorder (30).

9. Rail vehicle according to Claim 8, **characterized by** rectifying diodes (88) in supply lines (78, 82) between the door monitoring cameras (22) and the video encoder (28) and also between the door monitoring cameras (22) and the video recorder (36).

10. Rail vehicle according to any of the preceding claims, **characterized by** separate fuses (92, 94) for the primary network path (44) and the secondary network path (46) or components (28, 50, 62; 36, 52, 64) connected thereto.

11. Rail vehicle according to any of the preceding claims, **characterized in that** the video encoder (28) has a terminating resistor that can be turned off.

12. Rail vehicle according to any of the preceding claims, **characterized in that** the video recorder (36) is at a greater spatial distance from the door monitoring cameras (22) than the video encoder (28).

13. Rail vehicle according to any of the preceding claims, **characterized in that** a plurality of video encoders (28) and/or a plurality of video recorders (36) are provided in the rail vehicle (10), wherein the video encoders (28) are connected to the driver's cab (18) in parallel connection by means of the primary network path (44), and wherein the video recorders (36) are connected to the driver's cab (18) in parallel connection by means of the secondary network path (46).

14. Rail vehicle according to any of the preceding claims, **characterized by** a plurality of carriages (12), wherein in each of the carriages (12) a video encoder (28) and a video recorder (36) are provided, which are connected in each case to the door monitoring cameras (22) mounted on the exterior of the carriage (12).

15. Video monitoring system for a rail vehicle (10) having driver-only operation, which has a plurality of door monitoring cameras (22) for mounting on an exterior of the rail vehicle (10), at least one video encoder (28) for digitizing analogue video signals from all or a portion of the door monitoring cameras (22), at least one video recorder (36) for recording video signals from all or from a portion of the door monitoring cameras (22), and also a network (42) for transmitting digitized video signals to a driver's cab (18) of the rail vehicle (10), **characterized by** a primary network path (44), which is connected to the video encoder (28) and the driver's cab (18), and also a secondary network path (46), which is separate from the primary network path (44) and is connected to the video recorder (36) and the driver's cab (18) and, in the case of a disturbance in the primary network path (44) and/or in the video encoder (28), permits a transmission of video signals of the door monitoring cameras (22) from the video recorder (36) to the driver's cab (18).

## Revendications

1. Véhicule sur rails (10) comportant un poste de conduite (18), une pluralité de caméras de surveillance de porte (22) sur la face extérieure du véhicule sur rail (10), au moins un codeur vidéo (28) destiné à numériser des signaux vidéo analogiques provenant de l'ensemble d'une partie des caméras de surveillance de porte (22), au moins un enregistreur vidéo (36) destiné à enregistrer des signaux vidéo provenant de l'ensemble ou d'une partie des caméras de surveillance de porte (22), ainsi qu'un réseau (42) destiné à transmettre des signaux vidéo numérisés au poste de conduite (18), **caractérisé par** un tronçon de réseau primaire (44) connecté au codeur vidéo (28) et au poste de conduite (18) et par un tronçon de réseau secondaire (46) séparé du tronçon de réseau primaire (44) et connecté à l'enregistreur vidéo (36) et au poste de conduite (18), qui, en cas de perturbation du tronçon de réseau primaire (44) et/ou du codeur vidéo (28), autorise une transmission de signaux vidéo des caméras de surveillance de porte (22) de l'enregistreur vidéo (36) au poste de conduite (18).

2. Véhicule sur rails selon la revendication 1, **caractérisé par** deux codeurs vidéo séparés (50, 52) dont le premier (50) est connecté au tronçon de réseau primaire (44) et dont le second (52) est connecté au tronçon de réseau secondaire (46).

3. Véhicule sur rails selon la revendication 2, **caractérisé par** deux écrans (62, 64) dans le poste de conduite (18), dont l'un est connecté par l'intermédiaire du premier codeur vidéo (50) au tronçon de réseau primaire (44) et dont l'autre est connecté par l'intermédiaire du second codeur vidéo (52) tronçon au tronçon de réseau secondaire (46).

4. Véhicule sur rails selon la revendication 2, **caractérisé par** un écran unique (66 ; 70) dans le poste de conduite (18), qui est connecté à la fois aux tronçons de réseau primaire et secondaire (44, 46).

5. Véhicule sur rails selon la revendication 4, **caractérisé en ce qu'**en amont de l'écran (66), il est prévu un commutateur vidéo (68) qui est connecté par l'intermédiaire du premier codeur vidéo (50) au tronçon de réseau primaire (44) et par l'intermédiaire du second codeur vidéo (52) au tronçon de réseau secondaire (56).

6. Véhicule sur rails selon la revendication 4, **caractérisé en ce que** l'écran (70) est un écran HMI qui est directement connecté par l'intermédiaire d'interfaces de réseau séparées (72, 74) aux tronçons de réseau primaire et secondaire (44, 46) et comprend une unité de calcul intégrée qui bascule automatiquement, lors d'une perturbation du tronçon de réseau primaire (44) ou du codeur vidéo (28), sur le tronçon de réseau secondaire (46).

7. Véhicule sur rails selon l'une quelconque des revendications précédentes, **caractérisé par** des alimentations en courant ou en tension séparées (80, 86) destinées au tronçon de réseau primaire (44) et au tronçon de réseau secondaire (46).

8. Véhicule sur rails selon l'une quelconque des revendications précédentes, **caractérisé en ce que** les caméras de surveillance de porte (22) sont raccordées par l'intermédiaire du codeur vidéo (28) et par l'intermédiaire de l'enregistreur vidéo (30) à une alimentation en courant ou en tension.

9. Véhicule sur rails selon la revendication 8, **caractérisé par** des diodes de redressement (88) sur des lignes d'alimentation (78, 82) entre les caméras de surveillance de porte (22) et le codeur vidéo (28) et entre les caméras de surveillance de porte (22) et l'enregistreur vidéo (36).

10. Véhicule sur rails selon l'une quelconque des revendications précédentes, **caractérisé par** des fusibles séparés (92, 94) destinés au tronçon de réseau primaire (44) et au réseau de tronçon secondaire (46) ou par des composants connectés à ceux-ci (28, 50, 62 ; 36, 52, 64).

11. Véhicule sur rails selon l'une quelconque des revendications précédentes, **caractérisé en ce que** le codeur vidéo (28) comporte une résistance de terminaison pouvant être déconnectée.

12. Véhicule sur rails selon l'une quelconque des revendications précédentes, **caractérisé en ce que** l'enregistreur vidéo (36) présente par rapport aux caméras de surveillance de porte (22) un espacement spatial plus important que par rapport au codeur vidéo (28).

13. Véhicule sur rails selon l'une quelconque des revendications précédentes, **caractérisé en ce qu'**il est prévu plusieurs codeurs vidéo (28) et/ou plusieurs enregistreurs vidéo (36) dans le véhicule sur rails (10), dans lequel les codeurs vidéo (28) sont connectés par l'intermédiaire du tronçon de réseau primaire (44) selon un montage en parallèle avec le poste de conduite (18) et dans lequel les enregistreurs vidéo (36) sont connectés par l'intermédiaire du tronçon de réseau secondaire (46) selon un montage en parallèle avec le poste de conduite (18).

14. Véhicule sur rails selon l'une quelconque des revendications précédentes, **caractérisé par** de multiples voitures (12), dans lequel il est prévu dans chacune des voitures (12) un codeur vidéo (28) et un enregistreur vidéo (36) qui sont respectivement connectés aux caméras de surveillance de porte (22) montées sur la face extérieure de la voiture (12).

15. Système de surveillance vidéo destiné à un véhicule sur rails (10) ayant une auto-assistance du conducteur, qui comporte une pluralité de caméras de surveillance de porte (22) destinées à être montées sur une face extérieure du véhicule sur rails (10), au moins un codeur vidéo (28) destiné à numériser des signaux vidéo analogiques provenant de l'ensemble ou d'une partie des caméras de surveillance de porte (22), au moins un enregistreur vidéo (36) destiné à enregistrer des signaux vidéo provenant de l'ensemble ou d'une partie des caméras de surveillance de porte (22), ainsi qu'un réseau (42) destiné à transmettre des signaux vidéo numérisés à un poste de conduite (18) du véhicule sur rails (10), **caractérisé par** un tronçon de réseau primaire (44) connecté au codeur vidéo (28) et au poste de conduite (18) et par un tronçon de réseau secondaire (46) séparé du tronçon de réseau primaire (44) et connecté à l'enregistreur vidéo (36) et au poste de conduite (18), qui, en cas de perturbation du tronçon de réseau primaire (44) et/ou du codeur vidéo (28), autorise une transmission de signaux vidéo des caméras de surveillance de porte (22) de l'enregistreur vidéo (36) au poste de conduite (18).
